(19) Europäisches Patentamt
European Patent Office
Office européen des brevets

(11) Publication number: 0 112 724 B1

# (12) EUROPEAN PATENT SPECIFICATION

(45) Date of publication of patent specification: 13.04.88

(51) Int. Cl.$^4$: **C 08 G 75/23**, C 08 G 65/48

(21) Application number: 83307902.3

(22) Date of filing: 22.12.83

## (54) Process for sulphonating polysulphones.

(30) Priority: 27.12.82 US 453162

(43) Date of publication of application: 04.07.84 Bulletin 84/27

(45) Publication of the grant of the patent: 13.04.88 Bulletin 88/15

(84) Designated Contracting States: AT BE CH DE FR GB IT LI LU NL SE

(56) References cited:
DE-A-2 415 444
US-A-3 875 096
US-A-4 273 903

(73) Proprietor: ALBANY INTERNATIONAL CORP.
1 Sage Road
Menards New York 12201 (US)

(72) Inventor: Coplan, Myron J.
47 Spleen Street
Natick, MA 01760 (US)
Inventor: Gotz, Gertrud
50 Green Street
Brookline, MA 02146 (US)

(74) Representative: Perry, Robert Edward et al
GILL JENNINGS & EVERY 53-64 Chancery Lane
London WC2A 1HN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 112 724 B1

## Description

This invention relates to a process for sulphonating polysulphones. Sulphonated polysulphones and their derivatives are useful as membrane-forming materials for a variety of separation processes, e.g. reverse osmosis, ultra-filtration, ion-exchange and electro-dialysis.

US—A—3709841 describes the sulphonation of polyaryl sulphones, in which a proportion of the aromatic rings is substituted with hydroxysulphonyl radicals. There are, however, polyaryl ether sulphones which may be linear or branched, having recurring units of the formula

$$—Ar_1—SO_2—Ar_2—O— \quad (I)$$

wherein $Ar_1$ and $Ar_2$ are the same or different phenylene radicals optionally substituted with non-deactivating groups (there may also be linking radicals other than the ether oxygen atom which is illustrated). These polymers are notoriously difficult to sulphonate, owing to the electron-withdrawing effect of the sulphone groups. These groups deactivate the adjacent aromatic rings for electrophilic substitution. Sulphonation of these polymers with chlorosulphonic acid or oleum at ambient temperatures requires an enormous excess of the sulphonation agent and results in a highly degraded product. The degree of sulphonation is impossible to control. The surplus of sulphonation agent complicates the work-up procedures (see US—A—4273903, Examples 10, 11 and 12).

In order to overcome the above difficulties, copolymers of such polysulphones have been prepared which contain, in addition to the units (I), varying amounts of relatively easily sulphonatable units of formula II

$$—O—Ph—O—Ph—SO_2—Ph— \quad (II)$$

wherein Ph is 1,4-phenylene. Such polymers are described in US—A—4273903 (cited above).

In general, polysulphones have been sulphonated in a homogeneous phase reaction. This has involved dissolving the polymer in a solvent before the sulphonating agent is added.

Blackadder *et al*, Polymer *20* (1979) 781—782, describe dissolving poly(ether sulphone) in dichloromethane, to give a clear solution which, after cooling from 40°C to 5°C and storage overnight, changed to a "whitened solid mass". Technical Service Information Note No. VX TS 15.79 issued in April 1979 by ICI Plastics Division, Welwyn Garden City, England, concerning their product Victrex (polyethersulphone), states that "the use of a single solvent will, in some cases, produce a cheese-like solid (crystalline complex)".

According to the present invention, a process for the sulphonation of a polysulphone having substantially only recurring units of the formula

$$—Ph—SO_2—Ph—O— \quad (III)$$

wherein Ph is 1,4-phenylene, comprises dissolving the polysulphone in a fluid, chlorinated hydrocarbon solvent, allowing a voluminous precipitate to form in the solution; and reacting the precipitate/solvent system, at −50 to +80°C, with a sulphonating agent in an amount which provides from 0.4 to 5 atoms of sulphur per atom of sulphur in the unsulphonated polymer.

The polysulphones which are used as starting materials in the process of the invention are known to crystallise from a variety of solvents, e.g. methylene chloride, DMF and DMAC. The crystallisation is promoted by agitation or the addition of a non-solvent, e.g. traces of water to methylene chloride. The crystallisation involves the formation of a mixed polymer/solvent inter-crystalline structure, the exact nature of which is still unknown. The solvent/polymer inter-crystallites show distinct wide-angle X-ray scattering and melting endotherms. The crystalline structure collapses on drying and is accompanied, as expected, by the disappearance of X-ray scattering and melting endotherms. The polymer/solvent co-crystalline complex forms a very voluminous solid precipitate (described herein as "sludge"). Polymer/solvent intercrystallites are usually extremely small, e.g. less than 1 μm in average diameter, and are present in the form of a suspension in a surplus of the solvent.

The use of a chlorinated hydrocarbon as a suspension medium allows the sulphonation of the sludge or solid polysulphone to proceed advantageously. Examples of chlorinated hydrocarbons which can be used are methylene chloride, chloroform, 1,2-dichloroethane and carbon tetrachloride. Methylene chloride is preferred.

The sulphonation is carried out by simple admixture of the suspension of polymer with a sulphonating agent. Examples of such agents are chlorosulphonic acid and, preferably, sulphur trioxide. The sulphonating agent is employed in a proportion sufficient to obtain a ratio of the number of sulphur atoms in the sulphonating agent to the number of sulphur atoms in the polymer which is from 0.4:1 to 5:1.

The temperature at which sulphonation takes place is not critical. An advantageous temperature range is from −50 to +80, preferably from −10 to +25°C.

When the desired degree of sulphonation has been reached, the desired sulphonated polymer may be separated from the reaction mixture by conventional techniques such as filtration, washing and drying.

The polymer products of the process of the invention may be neutralised by the addition of a base, such as ammonia, when desired, and converted to alkali salts thereof. The alkali salts may be used for the same purposes as the parent acid polymers.

The structure of the sulphonated products may resemble, to a certain extent, that of a block

copolymer with alternating regions of highly sulphonated and unsulphonated backbone sequences. The heterogeneously sulphonated polymer has, as might be expected, a slightly lower solubility in alcohol/$H_2O$ mixtures than a comparable homogeneously-sulphonated polysulphone of analogous ion-exchange capacity. The sulphonation process is simple and permits large amounts of polymer to be sulphonated in a single sulphonation run. This contributes to high productivity.

The sulphonated resin products of the process of the invention are generally soluble in polar solvents such as dimethylformamide and dimethylacetamide. The resin products with high degrees of sulphonation are soluble in alcohol/$H_2O$ mixtures. The resin products appear to be structurally unique in that, instead of having a random sulphonation, the sulphonyl groups are spaced in a select order.

Separatory membranes may be advantageously prepared from sulphonated products of the invention, by casting a solution of the resin on the surface of a dense or support, or onto the surface of a porous support, followed by evaporation of the solvent. Reinforced membranes can be prepared by casting onto a screen or a woven fabric. The techniques of preparing membranes from solutions of sulphonated polysulphones are well known; these techniques are described in, for example, GB—A—1350342.

The following Examples illustrate the process of the invention. The polysulphone was in all cases "Victrex® PES—600P", supplied by ICI Ltd., England, having recurring units of formula III. The sulphonating agent used in Example 1 was sulphur trioxide, supplied by Allied Chemicals as stabilised Sulfan® B in methylene chloride.

Example 1

350 g (equivalent to 1.5 moles of S-containing monomer) of the polysulphone, pre-dried 4 hours at 150°C, were dissolved in 3.5 litres of methylene chloride (HPLC grade solvent; Fisher Scientific). The solution was stirred overnight (600 rpm) at room temperature. Crystallisation usually takes place within hours, but the process is strongly dependent on stirring conditions and on trace amounts of moisture being present.

After crystallisation, the resulting sludge suspension (kept under a dry $N_2$ blanket) was cooled to 0—5°C, with continuous stirring. A 10% solution of 65.2 $cm^3$ (1.5 moles) of the sulphonating agent was prepared, and added slowly, within a 90 minute period, to the vigorously-stirred "sludge". The resulting reaction mixture was stirred for an additional 2 hours. The coolant was removed and the top methylene chloride layer decanted. The precipitate was washed with fresh $CH_2Cl_2$ and dried in a vacuum oven (13 Pa) at 30—40°C, to a constant weight. The ion-exchange capacity (IEC) of the sulphonated polymer was about 1.8—1.9 meq/g.

5 g of the sulphonated polysulphone were dissolved in 100 $cm^3$ of an isopropyl alcohol/water mixture (90/10 by volume). A composite hollow fibre membrane was then prepared by coating a porous polysulphone hollow fibre continuously with the prepared coating solution, as described in the report to the Office of Water Research and Technology, U.S. Department of Interior, Contract No. 14—34—0001—9531.

The composite hollow fibre membrane was found to be useful in a reverse osmosis water desalination process. The membrane exhibited fluxes between 0,06 and 0,08 $m^3$ per $m^2$ of membrane per day (1.5—2 gfd) combined with 90% salt rejection of a 3000 ppm NaCl solution, at a pressure of 2750 MPa (400 psi) at 25°C.

Example 2

The polysulphone was treated with Sulfan® B as described in Example 1, except that a 0.35:1 ratio of $SO_3$ per aromatic ring was used. 125 g (0.54 moles) Victrex were dissolved in 940 $cm^3$ of $CH_2Cl_2$ and, after crystallisation, 16.4 $cm^3$ (equivalent to 0.38 moles of S-containing monomer) $SO_3$ (as a 10% solution in $CH_2Cl_2$) were slowly added to the vigorously-stirred reaction mixture, within a 90 minute period. The reaction mixture was stirred for an additional 2 hours, the top $CH_2Cl_2$ layer decanted and the reaction product washed twice with 5N KCl solution.

The neutralised sulphonated polymer in the potassium form was washed with deionised water until no traces of $Cl^-$ ion could be detected, and dried to a constant weight in a vacuum oven (13 Pa, 50°C). The yield was 98% and the IEC of the sulphonated polymer 1.5 meq/g.

10 g of the sulphonated polysulphone were dissolved in 30 $cm^3$ dimethylformamide. The solution was cast on a glass plate and drawn down to a thickness of 0.1 mm with a Gardner knife. The solvent was swept with a stream of dry nitrogen at 60°C, and the film was finally dried at 150°C for 30 minutes. The perm-selectivity of the membrane, estimated from the membrane potential measured between 0.1N and 1N KCl solutions, was 95%, and the electrical resistance 26 ohm/$cm^2$ (measured in 0.1N KCl solution at 25°C).

Example 3

The polysulphone Victrex® was treated with Sulfan B as described in Example 1, except that a 1:1 ratio of $SO_3$ per aromatic ring was used. 350 g (equivalent to 1.5 moles of S-containing monomer) of Victrex® were dissolved in 3.5 litres methylene chloride and, after crystallisation, 130.5 $cm^3$ (3.0 moles) of $HClSO_3$ as a 10% solution in $CH_2Cl_2$ were added slowly within a 90-minute period to the vigorously-stirred reaction mixture. The work-up was carried out as in Example 1, to yield 420 g of sulphonated polysulphone.

5 g of the sulphonated polysulphone were dissolved in 100 $cm^3$ of a methyl alcohol/water mixture (95/5 by volume). A composite hollow fibre membrane was then prepared following the procedure described in Example 1. The membrane exhibited fluxes between 0,8 and 1,2 $m^3$ per

$m^2$ of membrane per day (20 to 30 gfd) combined with 60—70% salt rejection when utilised in a reverse osmosis desalination process of 3000 ppm NaCl solution at a pressure of 2750 MPa (400 psi) at 25°C.

**Claims**

1. A process for the sulphonation of a polysulphone having substantially only recurring units of the formula

—Ph—$SO_2$—Ph—O—

wherein Ph is 1,4-phenylene, which comprises the steps of:

dissolving the polysulphone in a fluid, chlorinated hydrocarbon solvent, allowing a voluminous precipitate to form in the solution; and

reacting the precipitate/solvent system, at −50 to +80°C, with a sulphonating agent in an amount which provides from 0.4 to 5 atoms of sulphur per atom of sulphur in the unsulphonated polysulphone.

2. A process according to claim 1, in which the solvent is methylene chloride, chloroform, 1,2-dichloroethane or carbon tetrachloride.

3. A process according to claim 1, in which the solvent is methylene chloride.

4. A process according to any preceding claim, in which the sulphonating agent is sulphur trioxide.

**Patentansprüche**

1. Verfahren zur Sulfonierung eines Polysulfons mit im wesentlichen nur wiederkehrenden Einheiten der Formel:

—Ph—$SO_2$—Ph—O—,

worin Ph für 1,4-Phenylen steht, welches Verfahren die folgenden Stufen umfaßt:

— Auflösen des Polysulfons in einem flüssigen, chlorierten Kohlenwasserstofflösungsmittel, wobei in der Lösung ein voluminöser Niederschlag sich ausbilden gelassen wird; und

— Umsetzen des Niederschlag/Lösungsmittelsystems bei −50 bis +80°C mit einem Sulfonierungsmittel in einer Menge, welche von 0,4 bis 5 Atome Schwefel je Atom Schwefel im unsulfonierten Polysulfon ergibt.

2. Verfahren nach Anspruch 1, worin das Lösungsmittel Methylenchlorid, Chloroform, 1,2-Dichlorethan oder Tetrachlorkohlenstoff ist.

3. Verfahren nach Anspruch 1, worin das Lösungsmittel Methylenchlorid ist.

4. Verfahren nach einem beliebigen vorstehenden Anspruch, worin das Sulfonierungsmittel Schwefeltrioxid ist.

**Revendications**

1. Procédé de sulfonation d'une polysulfone ne portant pratiquement que des motifs récurrents, de formule

—Ph—$SO_2$—Ph—O—

dans laquelle Ph est un groupe 1,4-phénylène, procédé qui comprend les étapes consistant:

à dissoudre la polysulfone dans un solvant hydrocarboné chloré liquide, en laissant un précipité volumineux se former dans la solution, et

à faire réagir le système précipité/solvant, à une température de −50 à +80°C, avec un agent de sulfonation en une quantité apportant 0,4 à 5 atomes de soufre par atome de soufre présent dans la polysulfone non sulfonée.

2. Procédé suivant la revendication 1, dans lequel le solvant est le chlorure de méthylène, le chloroforme, le 1,2-dichloréthane ou le tétrachlorure de carbone.

3. Procédé suivant la revendication 1, dans lequel le solvant est le chlorure de méthylène.

4. Procédé suivant l'une quelconque des revendications précédentes, dans lequel l'agent de sulfonation est l'anhydride sulfurique.